# EUROPEAN PATENT SPECIFICATION

(11) **EP 3 129 416 B1**
(45) Date of publication and mention of the grant of the patent: **06.06.2018**
(21) Application number: 15717744.5
(22) Date of filing: 06.04.2015
(51) Int. Cl.: C08F 220/18, C08F 2/48

(54) **REGULATION OF A CONTROLLED RADICAL POLYMERIZATION OF ACRYLATES BY LIGHT**
REGELUNG EINER GESTEUERTEN RADIKALISCHEN POLYMERISATION VON ACRYLATEN MITTELS LICHT
RÉGULATION D'UNE POLYMÉRISATION RADICALAIRE CONTRÔLÉE D'ACRYLATES PAR LA LUMIÈRE

(30) Priority: 07.04.2014 US 201461976178 P
(43) Date of publication of application: 15.02.2017
(73) Proprietor: Dow Global Technologies LLC, Midland, MI 48674 (US); THE REGENTS OF THE UNIVERSITY OF CALIFORNIA, Oakland CA 94607-5200 (US)
(72) Inventor: KRAMER, John, W., Midland, MI 48640 (US); HAWKER, Craig, J., Santa Barbara, CA 93108 (US); FORS, Brett, P., Midland, MI 48674 (US); TREAT, Nicolas, J., Goleta, CA 93117 (US)
(74) Representative: Houghton, Mark Phillip
(86) International application number: PCT/US2015/024459
(87) International publication number: WO 2015/157149

(56) References cited:
- EP-A1- 1 873 175
- US-A1- 2011 218 306

## Description

### CROSS-REFERENCE TO RELATED APPLICATIONS

This application claims priority to U.S. Provisional Application No. 61/976,178, filed April 7, 2014, the disclosure of which is hereby incorporated by reference in its entirety.

### BACKGROUND OF THE INVENTION

### Field of the Invention

The disclosure provides methods for controlled radical polymerization of acrylic monomers using photoredox catalyst, where the polymerization is mediated, as well as regulated, by light.

### Description of the Related Art

Controlled radical polymerizations (CRP), such as nitroxide mediated polymerization (NMP), reversible-addition fragmentation chain transfer polymerization (RAFT), and atom transfer radical polymerization (ATRP), have revolutionized the field of polymer chemistry, allowing for the synthesis of well-defined macromolecular structures with excellent functional group tolerance. Perhaps of greater importance is the facile nature of the process and mild reaction conditions which allows non-experts access to functional materials. More recently, additional control over living radical polymerizations has been achieved through regulation of the chain growth process by an external stimulus. This auxiliary control is a major advance for the field and the potential for further innovation is significant. For example, electrochemical ATRP has been used to pattern polymer brushes on surfaces, as well as gain control over aqueous polymerizations.

Understandably, there have been a number of efforts to increase the technical applicability of polymerization processes, for example through strategies to regulate the activation and deactivation steps by using an external stimulus. In considering the wide range of possible external stimuli, light offers many attractive features such as readily available light sources, facile use and both spatial and temporal control. On this basis, significant work has been dedicated to the development of photoinitiated and photoregulated radical polymerizations (i.e., photocontrolled RAFT, ATRP, organocatalytic, cobalt-mediated, and tellurium-mediated methods).

### SUMMARY OF THE INVENTION

The method of the disclosure provides ability to precisely control the molecular weight and molecular weight distributions, as well as gain sequence and architecture control in polymer synthesis. In a broad aspect, the methods of the disclosure provide a controlled, light mediated radical polymerization of a variety of acrylic monomers using an Iridium-based photoredox catalyst. The polymerization methods of the disclosure provide efficient chain capping and re-initiation in response to light, as well as a linear increase in molecular weight with conversion and first order reaction rates for molecular weights from less than 1,000 g/mol to in excess of 100,000 g/mol. Further, the methods of the disclosure allow for the synthesis of block copolymers, as well as the polymerization of acidic monomers (e.g., acrylic acid).

In one aspect, the disclosure provides methods for preparing an acrylic polymer composition, comprising: combining one or more of (meth)acrylate, (meth)acrylamide, and (meth)acrylonitrile monomers with an initiator and a photoredox catalyst in a solvent system comprising N,N-dimethylacetamide to obtain a reaction mixture; polymerizing the monomers by irradiating the reaction mixture with a light source; and discontinuing polymerization.

In another aspect, the disclosure provides methods for preparing an acrylic polymer composition, comprising: combining one or more of (meth)acrylate, (meth)acrylamide, and (meth)acrylonitrile monomers with an initiator and a photoredox catalyst in a solvent system comprising N,N-dimethylacetamide to obtain a reaction mixture, wherein the concentration of the (meth)acrylate monomer in the reaction mixture is at least about 1.0 M; polymerizing the monomers by irradiating the reaction mixture with a light source; and discontinuing polymerization.

In another aspect, the disclosure provides methods for preparing an acrylic polymer composition, comprising: combining one or more of acrylate monomers with an initiator and a photoredox catalyst in a solvent system comprising N,N-dimethylacetamide to obtain a reaction mixture; polymerizing the monomers by irradiating the reaction mixture with a light source; and discontinuing polymerization.

In another aspect, the disclosure provides methods for preparing an acrylic polymer composition, comprising: combining one or more of acrylate monomers with an initiator and a photoredox catalyst in a solvent system comprising N,N-dimethylacetamide to obtain a reaction mixture, wherein the concentration of the acrylate monomer in the reaction mixture is at least about 3.0 M; polymerizing the monomers by irradiating the reaction mixture with a light source; and discontinuing polymerization.

In another aspect, the disclosure provides methods for preparing an acrylic polymer composition, comprising: combining one or more of methacrylate monomers with an initiator and a photoredox catalyst in a solvent system comprising N,N-dimethylacetamide to obtain a reaction mixture; polymerizing the monomers by irradiating the reaction mixture with a light source; and discontinuing polymerization.

In another aspect, the disclosure provides methods for preparing an acrylic polymer composition, comprising: combining one or more of methacrylate monomers with an initiator and a photoredox catalyst in a solvent system comprising N,N-dimethylacetamide to obtain a reaction mixture, wherein the concentration of the acrylate monomer in the reaction mixture is at least about 2.0 M; polymerizing the monomers by irradiating the reaction mixture with a light source; and discontinuing polymerization.

In another aspect, the disclosure provides methods for preparing an acrylic polymer composition of formula I: 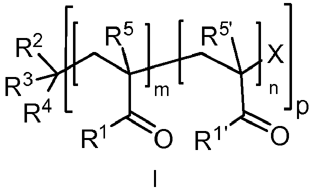 wherein
m and n are independently an integer about 3 to about 1500;
p is an integer of 1 to 6;
X is a halogen, xanthate, dithioester, trithiocarbonate, dithiocarbamate, or nitroxide;
each R¹ and R¹' is independently -OH, C₁-C₂₀ alkoxy, amino, mono or di(C₁-C₂₀ alkyl)amino, aryloxy, or alkoxyaryl;
R² is -CN, -CH=CH₂, -C(O)C₁-C₆ alkoxy, -COOH, -(CH₂)₁₋₂C(O)C₁-C₆ alkoxy, -(CH₂)₁₋₂COOH, -(CH₂)₁₋₃C₁-C₆ alkoxy, -(CH₂)₁₋₃OH, C₁-C₆ alkyl, aryl, or heteroaryl;
R³ and R⁴ are independently selected from hydrogen, -CN, C₁-C₆ alkyl, and phenyl; and each R⁵ and R⁵' is independently is H or methyl;
the method comprising: combining one or more of monomers with an initiator and a photoredox catalyst in a solvent system comprising N,N-dimethylacetamide to obtain a reaction mixture; polymerizing the monomers by irradiating the reaction mixture with a light source; and discontinuing polymerization.

In yet another aspect, the disclosure provides methods for preparing an acrylic polymer composition of formula I (as described above) the method comprising: combining one or more of monomers with an initiator and a photoredox catalyst in a solvent system comprising N,N-dimethylacetamide to obtain a reaction mixture, wherein the concentration of the acrylate monomer in the reaction mixture is at least about 3.0 M; polymerizing the monomers by irradiating the reaction mixture with a light source; and discontinuing polymerization.

In certain aspect, the disclosure provides methods for preparing an acrylic polymer of a predetermined molecular weight and polydispersities. In other certain aspects, the disclosure provides methods for preparing an acrylic polymer having selected lengths and/or selected molecular weights and/or selected molecular weight distributions and/or selected architectures. In other certain aspects, the disclosure provides methods for preparing an acrylic polymer having a polydispersity index between about 1.0 and about 2.5. In other certain aspects, the disclosure provides methods for preparing an acrylic polymer having a polydispersity index of greater than 2.0. These methods comprise the steps as described above.

### BRIEF DESCRIPTION OF THE DRAWINGS

Figure 1 is a diagram illustrating aspects of a polymerization scheme that allows, for example, temporal and spatial control over radical polymerization reactions using light.
Figure 2 shows a proposed mechanism of a visible-light-mediated radical polymerization using an Ir-based photoredox catalyst. Pₙ=polymer chain.
Figure 3 shows the Polymerization of methyl acrylate with Ir(ppy)₃ while cycling the reaction's exposure to light. (a) Conversion vs. time; (b) Molecular weight (*Mₙ*) vs. conversion (diamonds) and *M_{w}*/*Mₙ* vs. conversion (triangles).
Figure 4 shows block copolymer synthesis and corresponding SEC traces (red trace = homopolymer, blue trace = block copolymer) (a) poly(methyl acrylate)-*b*-(*n*-butyl acrylate); (b) poly(methyl methacrylate)-*b*-(methyl acrylate), where the *Mₙ* of PMMA-*b*-PMA was determined using SEC; and (c) poly(methyl acrylate)-*b*-(methyl methacrylate).

### DETAILED DESCRIPTION OF THE INVENTION

Before the disclosed methods and materials are described, it is to be understood that the aspects described herein are not limited to specific embodiments, methods, apparati, or configurations, and as such can, of course, vary. It is also to be understood that the terminology used herein is for the purpose of describing particular aspects only and, unless specifically defined herein, is not intended to be limiting.

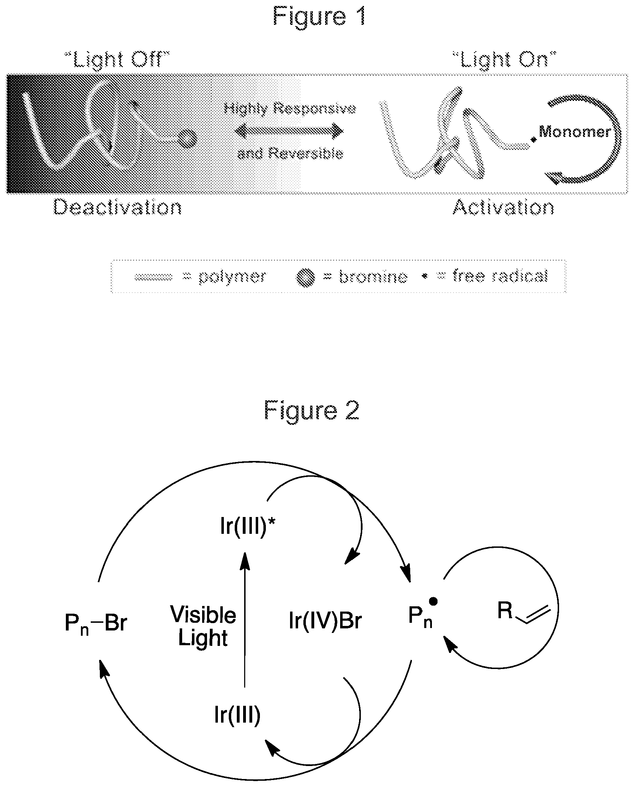

In view of the present disclosure, the methods described herein can be configured by the person of ordinary skill in the art to meet the desired need. In general, the disclosed methods provide improvements in the polymerization of acrylic polymer compositions with efficient activation and deactivation of polymerization with control over molecular weight and molecular weight distributions by only using ppm levels of the catalyst. A fundamental advantage of this process is also that, in the absence of irradiation, the chain end rests as the dormant alkyl bromide, protected from deleterious radical reactions but available for reactivation upon re-exposure to light (Figure 2). As a result, the methods of the disclosure provide improved efficient chain capping and re-initiation of polymerization. The methods of the disclosure also provide improvement in linear increase in molecular weight of the resultant polymer with conversion and first order reaction rates for molecular weights from less than 1,000 g/mol to in excess of 100,000 g/mol. In certain applications, the methods of the disclosure provide polymers with the molecular weight far greater than 100,000 g/mol. Such molecular weights approach the order of 1,000,000 g/mol. Moreover, the spatial and temporal control of the methods of the disclosure may be used for patterning complex 3-dimensional polymer brushes on surfaces, thus allows access to new structures and assemblies that are difficult to prepare by existing methods.

The methods of the disclosure require that acrylate-based monomers are contacted with an initiator and a photoredox catalyst in a solvent system comprising N,N-dimethylacetamide to obtain a reaction mixture; polymerizing the monomers by irradiating the reaction mixture with a light source; and discontinuing polymerization.

Advantageously, the methods carried out in solvent system comprising N,N-dimethylacetamide (DMA) afford excellent control of the polymerization. One of skill in the art will recognize that DMA may be used neat or may be mixed with one or more additional solvents. These additional solvents include, but are not limited to, dimethyl formamide (DMF), toluene, 1,4-dioxane, xylene, anisole, dimethyl sulfoxide (DMSO), tetrahydrofuran (THF), water, methanol, acetonitrile, chloroform and the like. When DMA is mixed with one or more of additional solvents, the solvent system comprising DMA comprises more than about 10 vol% of DMA, or more than about 20 vol% of DMA, or more than about 30 vol% of DMA, or more than about 40 vol% of DMA, or more than about 50 vol% of DMA, or more than about 60 vol% of DMA, or more than about 70 vol% of DMA, or more than about 80 vol% of DMA, or more than about 90 vol% of DMA, or more than about 92 vol% of DMA, or more than about 95 vol% of DMA, or more than about 96 vol% of DMA, or more than about 97 vol% of DMA, or more than about 98 vol% of DMA, or more than about 99 vol% of DMA based on the total volume of solvent. In one embodiment of the methods of the disclosure, the solvent system consists essentially of DMA. In one embodiment, DMA used in the methods of the disclosure is not mixed with any other solvent. Thus, in some embodiments of the methods of the disclosure, the solvent system consists of DMA.

The methods of the disclosure may be carried out in any suitable concentration of the monomer in the reaction mixture. For example, the concentration of the monomer in the reaction mixture may be at least about 1.0 M. One of skill in the art will appreciate that the upper limit of the monomer concentration in the reaction mixture will depend on the particular monomer used, but will be no more than about 10 M, or 9.0 M, or 8.0 M, or 7.0 M, or 6.0 M, or 5.0 M. In one embodiment, the concentration of the monomer in the reaction mixture is at least about 1.5 M. In another embodiment, the concentration of the monomer in the reaction mixture is at least about 2.0 M. In another embodiment, the concentration of the monomer in the reaction mixture is at least about 2.1 M, or at least about 2.2 M , or at least about 2.3 M, or at least about 2.4 M, or at least about 2.5 M, or at least about 2.6 M, or at least about 2.7 M, or at least about 2.8 M, or at least about 2.9 M. In another embodiment, the concentration of the monomer in the reaction mixture is at least about 3.0 M. Concentrations of the monomer in the reaction mixture particularly suitable for use with acrylate monomers are at least about 2.7 M, or at least about 3.0 M, or at least about 3.2 M, or at least about 3.5 M. Concentrations of the monomer in the reaction mixture particularly suitable for use with methacrylate monomers are at least about 1.0 M, or at least about 1.3 M, or at least about 1.5 M, or at least about 1.7 M, or at least about 2.0 M, or at least about 2.4 M. Concentrations of the monomer in the reaction mixture particularly suitable for use with (meth)acrylamide or (meth)acrylonitrile monomers are at least about 1.0 M, or at least about 1.5 M, or at least about 2.0 M, or at least about 2.5 M, or at least about 3.0 M.

The photoredox catalyst used in each method of the disclosure is a catalyst capable of absorbing light to produce an excited state, which then reduces the initiator (e.g., alkyl halide) to give the desired alkyl radical, which undergoes polymerization with an alkene monomer that is selected from typical alkene monomers that undergo traditional radical polymerization. Suitable photoredox catalysts are well known in the art. Typically, the photoredox catalyst comprises a transition metal selected from the group consisting of Ir, Co, Fe, Rh, Pt, Pd, Mn, Os, Eu, Cr, Cu, Al, Ti, Zn, Cd and Ru. These transition metal catalysts are complexed to give structures of the type ML¹L²L³, where L¹, L², and L³ are ligands typically used in the transition metal catalysts, and M is a transition metal. Examples of suitable ligands for use herein include, but are not limited to: 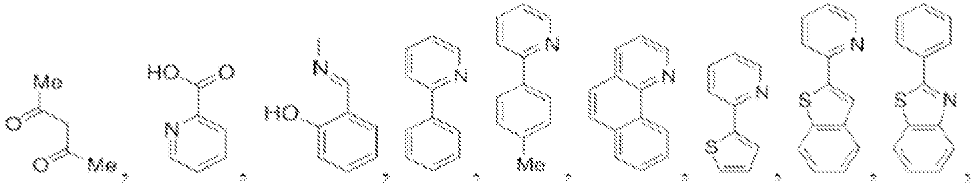 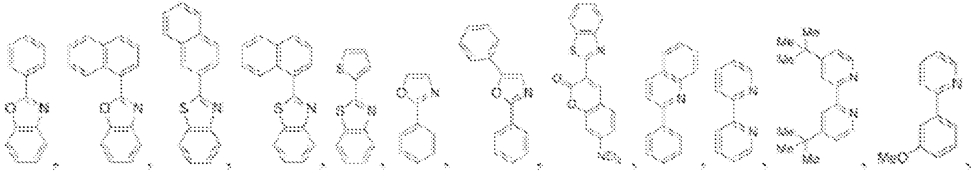 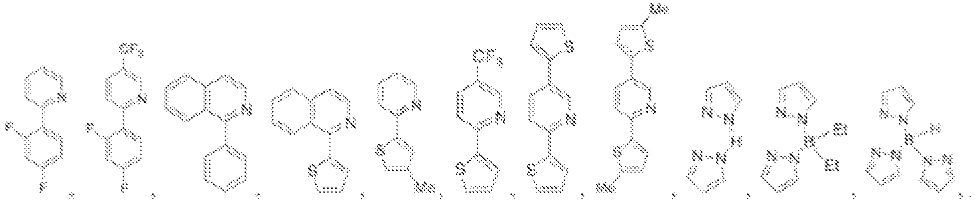 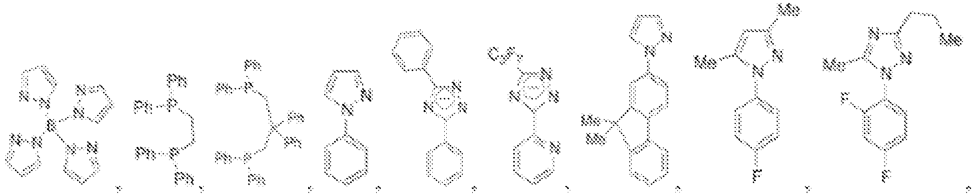 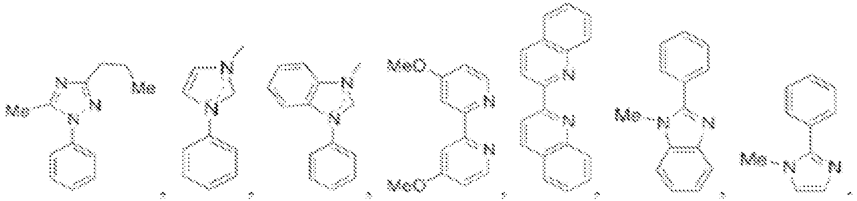 Examples of photoredox catalyst suitable for use in the methods of the disclosure include, but are not limited to:

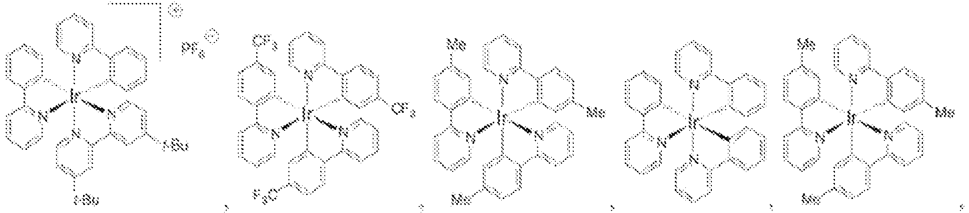

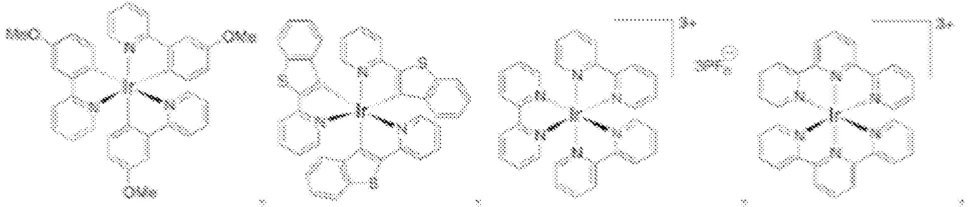

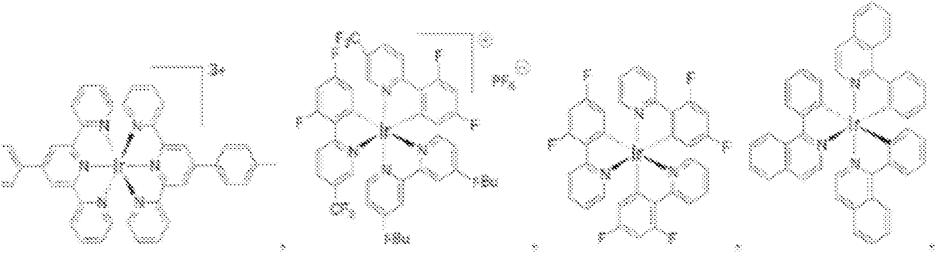

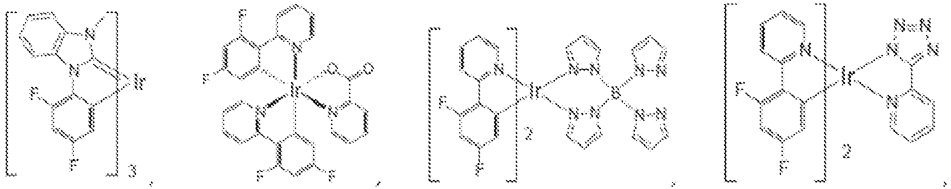

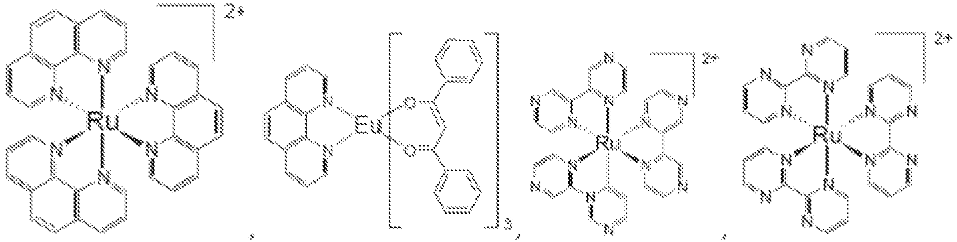

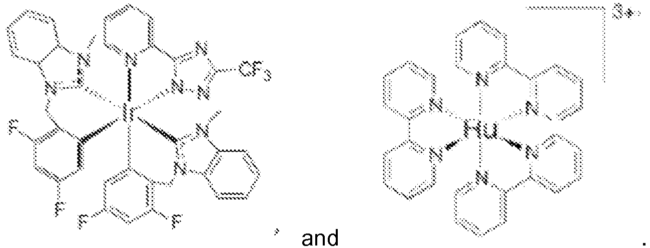

In one embodiment, the photoredox catalyst comprises Ir or Ru. In another embodiment, the photoredox catalyst used in the methods of the disclosure is fac-lr(2-phenylpyridine)₃.

The methods described herein can be operated at relatively low photoredox catalyst levels. Thus, the methods described herein can be performed with significantly lower costs while maintaining good conversion rates and molecular weight control over the polymerization. For example, in certain embodiments, the photoredox catalyst is present at about 0.00001 mol % to about 20 mol % relative to the amount of monomer used. In one embodiment, the methods of the disclosure operate at about 0.005 mol% to about 20 mol% of the photoredox catalyst relative to the amount of monomer used. In certain such embodiments, the photoredox catalyst is present at about 0.005 mol% to about 15 mol%, or 0.005 mol% to about 10 mol%, or 0.005 mol% to about 7.5 mol%, or 0.005 mol% to about 5 mol%, or 0.01 mol% to about 20 mol%, or 0.01 mol% to about 15 mol%, or 0.01 mol% to about 10 mol%, or 0.01 mol% to about 7.5 mol%, or 0.01 mol% to about 5 mol%, or 0.01 mol% to about 4 mol%, or 0.01 mol% to about 3 mol%, or 0.01 mol% to about 2 mol%, or 0.01 mol% to about 1 mol%, or 0.01 mol% to about 0.9 mol%, or 0.01 mol% to about 0.8 mol%, or 0.01 mol% to about 0.7 mol%, or 0.01 mol% to about 0.6 mol%, or 0.01 mol% to about 0.5 mol%, or 0.01 mol% to about 0.4 mol%, or 0.01 mol% to about 0.3 mol%, or 0.01 mol% to about 0.2 mol%, or 0.01 mol% to about 0.1 mol%, or 0.005 mol% to about 0.1 mol%, or 0.01 mol% to about 0.07 mol%, or 0.03 mol% to about 0.07 mol%, or 0.04 mol% to about 0.06 mol% of the photoredox catalyst relative to the amount of monomer used. In some embodiments, the photoredox catalyst is present at about 0.01 mol% to about 0.1 mol% relative to the amount of monomer used. In other embodiments, the photoredox catalyst is present at about 0.05 mol % relative to the amount of monomer used. In some other embodiments, the photoredox catalyst is present at about 0.1 mol % relative to the amount of monomer used. In yet other embodiments, the photoredox catalyst is present at about 0.01 mol % relative to the amount of monomer used. Of course, the person of ordinary skill in the art will understand that in certain embodiments and applications, the amounts of photoredox catalyst used may differ from those particularly described here.

An initiator compound of the disclosure reacts with a monomer in a radical polymerization process to form an intermediate compound capable of linking successively with additional monomer to form a polymer chain(s). Without being bound to a particular theory, it is believed that the number of growing polymer chains can be determined by the initiator. For example, the faster the initiation-the fewer terminations and transfers-the more consistent the number of propagating chains leading to narrow molecular weight distributions. Generally, organic halides may be used as initiators in methods of the disclosure. For example, alkyl halides and pseudo halides may be used. Suitable alkyl halides include alkyl bromides and alkyl chlorides. Initiators other than alkyl halide or pseudo halide that can be used in embodiments of the disclosure include, but are not limited to, allyl halides, xanthates, thioesters, thionoesters, dithioesters, trithiocarbonates, and nitroxides. In some embodiments of the disclosure, the shape or structure of an initiator can be selected to influence the architecture of a polymer. For example, initiators with multiple alkyl halide groups on a single core can lead to a star-like polymer shape. Additionally, suitable initiator may be chosen based on the specific end-functionality of the polymer desired. For example, the initiator suitable for the methods of the disclosure may contain a reactive functional group such as, but not limited to, carboxy, phthalimido, cyano, N-hydroxysuccinimide ester, pentafluorophenyl ester, etc. Examples of initiators suitable for use in the methods of the disclosure include, but are not limited to: 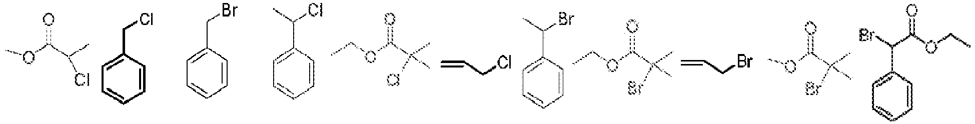 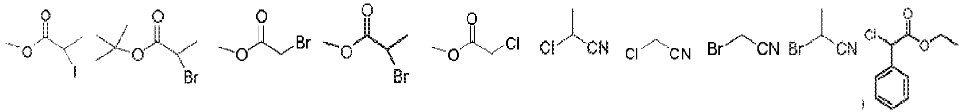 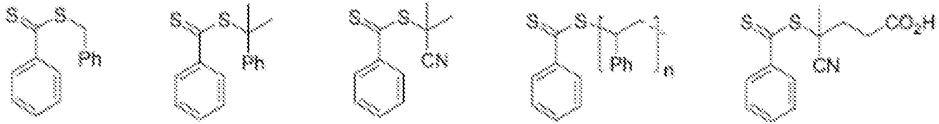 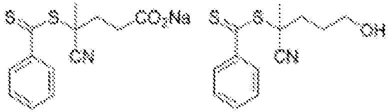 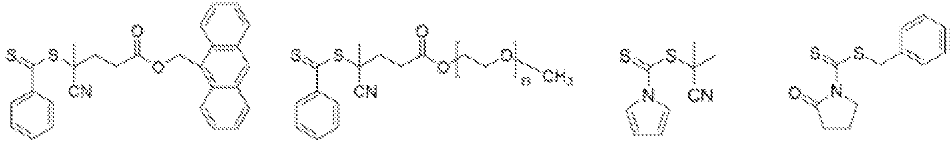 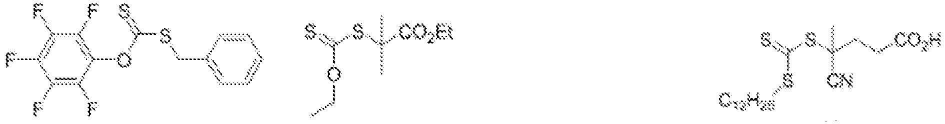 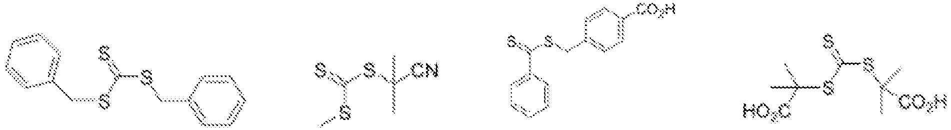 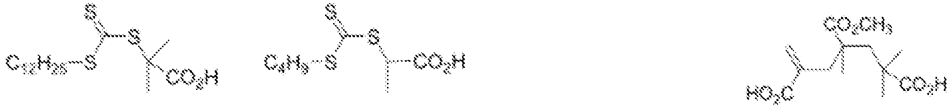 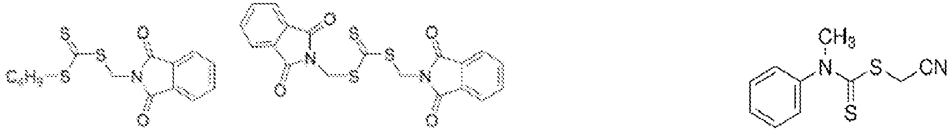 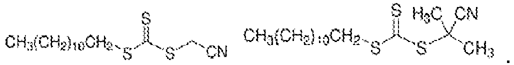 In one embodiment, the initiator suitable for use in the methods of the disclosure is ethyl α-bromoisobutyrate or benzyl α-bromoisobutyrate. In another embodiment, the initiator is ethyl α-bromoisobutyrate. In yet another embodiment, the initiator is benzyl α-bromoisobutyrate.

The methods described herein may be performed using a wide variety of (meth)acrylate, (meth)acrylamide, and (meth)acrylonitrile monomers, and the particular monomer(s) used in the process will be selected to produce a polymer product having the desired characteristics. Monomers that undergo radical polymerization in the disclosed methods include but are not limited to typical alkene monomers that undergo traditional radical polymerization. Examples include, but not limited to, alkyl methacrylates (e.g., methyl methacrylate), acrylates (including various alkyl acrylates), methacrylic acid, acrylic acid, benzyl methacrylate, benzyl acrylate, acrylamide, alkylacrylamide, dialkyl acrylamide (e.g., N,N-dimethylacrylamide), methacrylamide, alkyl methacrylamide, dialkyl methacrylamide, acrylonitrile, methacrylonitrile etc. The monomers may be further functionalized with one or more of reactive functional groups, which include, but are not limited to, carboxylic acids, amines, amides, alcohols, ketones, aldehydes, alkynes, fluorides, chlorides, bromides, iodides, ethers, esters, hydroxylamines, imines, azides, nitriles, isocyanates, isocyanides, nitrites, nitrosos, thiols, thioethers, sulfoxides, sulfonic acids, thiocyanates, isothiocyanates, thiones, thials, phosphines, phosphonic acids, phosphates, boronic acid, boronic esters, borinic acids, hetroaromatics, and heterocycles.

In one embodiment of the disclosure, the (meth)acrylate monomer is an acrylate monomer. In another embodiment, the acrylate may be selected from acrylic acid, methyl acrylate, ethyl acrylate, and butyl acrylate. In another embodiment, the reaction mixture comprises a single monomer. In another embodiment, the reaction mixture comprises a mixture of different monomers, e.g., one of the monomers is acrylate and one of the monomers is methacrylate. In another embodiment of the disclosure, the (meth)acrylate monomer is a methacrylate monomer. In another embodiment, the methacrylate may be selected from methacrylic acid, methyl methacrylate, ethyl methacrylate, and butyl methacrylate.

In one embodiment, at least one of monomers is acrylic acid. In another embodiment, at least one of monomers is methacrylic acid.

The methods of the disclosure allow precise control of polymer growth so as to form polymers having selected lengths and/or selected molecular weights (e.g. within selected MW ranges) and/or selected molecular weight distributions and/or selected architectures. In certain embodiments of the disclosure, polymer chains have a structure selected from a group consisting of block copolymers; random copolymers; gradient copolymers; periodic polymers; alternating polymers; statistical polymers; linear polymers; branched polymers; star polymers; brush polymers; comb polymers; graft polymers, and cyclic polymers. In one embodiment, the polymers are formed from at least two or more monomers. In another embodiment, the acrylic polymer prepared by the methods of the disclosure is a block, random, or gradient copolymer comprised of at least two different monomers. In some other embodiments, the acrylic polymer prepared by the methods of the disclosure is comprised of the same monomer.

As the rate of polymer formation is directly proportional to the amount of light exposure in embodiments of the disclosed methods, optionally, for example, polymer chain lengths in a reaction mixture are regulated by controlling an amount of time that the reaction mixture is exposed to light; and/or by controlling the intensity of light that reaches the reaction mixture. Embodiments of the invention can comprise exposing a reaction mixture to light multiple times in order to precisely tailor one or more characteristics of a polymer composition. For example, in some methods of the disclosure, a reaction mixture is first exposed to light for a period of time so that the radical polymerization process is activated; followed by period of time during which this reaction mixture is protected from light exposure so that the radical polymerization process is deactivated; and then re-exposing the reaction mixture to light for a period of time so that the radical polymerization process is re-activated, etc. One of skill in the art will appreciate that a light source may be one of the wide varieties of optical sources known in the art.

The methods disclosed herein can be used to form polymeric materials that have a number of desirable qualities including for example, a relatively low polydispersity. Optionally in embodiments of the invention, the polymer chains exhibit a polydispersity index such that *M_{w}*/*Mₙ* is between about 1.0 and about 2.5. In some embodiments, the polydispersity index is between about 1.0 and about 2.0, or between about 1.0 and about 1.9, or between about 1.1 and about 1.9, or between about 1.0 and about 1.8, or between about 1.1 and about 1.8, or between about 1.0 and about 1.7, or between about 1.1 and about 1.7, or between about 1.2 and about 1.7, or between about 1.2 and about 1.6, or about 1.0, or about 1.1, or about 1.2, or about 1.3, or about 1.4, or about 1.5, or about 1.6, or about 1.7, or about 1.8, or about 1.9, or even about 2.0. In certain embodiments, the polymer exhibits a polydispersity of *M_{w}*/*Mₙ* between about 1.0 and about 1.5. In some other embodiments, the polymer exhibits a polydispersity of M_{w}/Mₙ between about 1.2 and about 1.4. In certain embodiments of the disclosure, the polydispersity index of the polymer chains may be greater than 2.0, and can be, for example, greater than about 5, or about 10, or about 25, or about 50, or about 100, or about 150, or about 200.

In one embodiment, the polymerization may be discontinued by removing the light source. In addition to removing the light source, one of skill in the art will recognize that the polymerization may be discontinued by any method known in the art. For example, the polymerization may be discontinued by addition of a quenching reagent known in the art. In this embodiment, the light source may or may not be still present. Finally, the polymerization may be discontinued by exhausting the monomers available for the reaction.

As noted above, methods of the disclosure may be used to prepare a polymer of the formula I. In particular embodiments, the compounds of formula I are those wherein X is -Br. In other embodiments, each R¹ and R¹' is independently OH or C₁-C₆ alkoxy. In one embodiment, each R¹ and R¹' is C₁-C₆ alkoxy. In an exemplary embodiment, each R¹ and R¹' is selected from methoxy, ethoxy, and butoxy. In another embodiment, one of R¹ and R¹' is C₁-C₆ alkoxy, and the other is -OH. In certain embodiments, each R⁵ and R⁵' is independently is H. In some other embodiments, each R⁵ and R⁵' is independently is methyl. In some other embodiments, one of R⁵ and R⁵' is H, and the other is methyl. One of skill in the art will recognize that R², R³, and R⁴ will depend on the particular initiator used.

### Definitions

Throughout this specification, unless the context requires otherwise, the word "comprise" and "include" and variations (e.g., "comprises," "comprising," "includes," "including") will be understood to imply the inclusion of a stated component, feature, element, or step or group of components, features, elements or steps but not the exclusion of any other integer or step or group of integers or steps.

As used in the specification and the appended claims, the singular forms "a," "an" and "the" include plural referents unless the context clearly dictates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

As used herein the term "combining" includes adding one or more items to a reaction mixture.

As used herein the term "dispersity," "polydispersity," "polydispersity index", "PDI," and "*M*_{w}/*M*ₙ" are used interchangeably and refer to measure of the polymer uniformity with respect to distribution of molecular mass. The dispersity may be calculated by dividing weight average molecular weight (*M_{w}*) by the number average molecular weight (*Mₙ*) (i.e., *M*_{w}/*M*ₙ). In certain embodiments, the dispersity may be calculated according to degree of polymerization, where the dispersity equals *X*_{w}/*X*ₙ, where *X_{w}* is the weight-average degree of polymerization and *X*ₙ is the number-average degree of polymerization.

All percentages, ratios and proportions herein are by weight, unless otherwise specified. A weight percent (weight %, also as wt %) of a component, unless specifically stated to the contrary, is based on the total weight of the composition in which the component is included (e.g., on the total amount of the reaction mixture).

The term "alkoxy" as used herein, means an alkyl group, as defined herein, appended to the parent molecular moiety through an oxygen atom. Representative examples of alkoxy include, but are not limited to, methoxy, ethoxy, propoxy, 2-propoxy, butoxy, tert-butoxy, pentyloxy, and hexyloxy.

The term "alkyl" as used herein, means a straight or branched chain hydrocarbon containing from 1 to 20 carbon atoms unless otherwise specified. Representative examples of alkyl include, but are not limited to, methyl, ethyl, n-propyl, iso-propyl, n-butyl, sec-butyl, iso-butyl, tert-butyl, n-pentyl, isopentyl, neopentyl, n-hexyl, 3-methylhexyl, 2,2-dimethylpentyl, 2,3-dimethylpentyl, n-heptyl, n-octyl, n-nonyl, and n-decyl. The term "alkylene" refers to a divalent alkyl group, where alkyl is as defined herein.

The term "aryl," as used herein, means a phenyl (*i.e*., monocyclic aryl), or a bicyclic ring system containing at least one phenyl ring or an aromatic bicyclic ring containing only carbon atoms in the aromatic bicyclic ring system, or a polycyclic ring system containing at least one phenyl ring. The bicyclic aryl can be azulenyl, naphthyl, or a phenyl fused to a cycloalkyl, a cycloalkenyl, or a heterocyclyl. The bicyclic or polycyclic aryl is attached to the parent molecular moiety through any carbon atom contained within the phenyl portion of the bicyclic or polycyclic system, or any carbon atom with the napthyl, azulenyl, anthracene, or pyrene ring.

The term "halogen" as used herein, means -Cl, -Br, -I or -F.

The term "heteroaryl," as used herein, means a monocyclic heteroaryl or a bicyclic or polycyclic ring system containing at least one heteroaromatic ring. The monocyclic heteroaryl can be a 5 or 6 membered ring. The 5 membered ring consists of two double bonds and one, two, three or four nitrogen atoms and optionally one oxygen or sulfur atom. The 6 membered ring consists of three double bonds and one, two, three or four nitrogen atoms. The 5 or 6 membered heteroaryl is connected to the parent molecular moiety through any carbon atom or any nitrogen atom contained within the heteroaryl. The bicyclic or polycyclic heteroaryl consists of a heteroaryl fused to a phenyl, a cycloalkyl, a cycloalkenyl, a heterocyclyl, or a heteroaryl. Representative examples of heteroaryl include, but are not limited to, furyl, imidazolyl, isoxazolyl, isothiazolyl, oxadiazolyl, oxazolyl, pyridinyl, pyridazinyl, pyrimidinyl, pyrazinyl, pyrazolyl, pyrrolyl, tetrazolyl, thiadiazolyl, thiazolyl, thienyl, triazolyl, triazinyl, benzimidazolyl, benzofuranyl, benzothienyl, benzoxadiazolyl, benzoxathiadiazolyl, benzothiazolyl, cinnolinyl, 5,6-dihydroquinolin-2-yl, 5,6-dihydroisoquinolin-1-yl, furopyridinyl, indazolyl, indolyl, isoquinolinyl, naphthyridinyl, quinolinyl, or purinyl.

### EXAMPLES

The methods of the disclosure is illustrated further by the following examples, which are not to be construed as limiting the disclosure in scope or spirit to the specific procedures and compounds described in them. In all cases, unless otherwise specified, the column chromatography is performed using a silica gel solid phase.

### Material and equipment

All polymerizations were carried out under an argon atmosphere. Anhydrous N,N-Dimethylacetamide and anhydrous 1-methyl-2-pyrrolidinone were purchased from Sigma-Aldrich and used as received. Methyl acrylate, n-butyl acrylate, *t*-butyl acrylate, and ethyl acrylate were purchased from Sigma-Aldrich and passed through a plug of basic alumina before use. Acrylic acid was purchased from Sigma-Aldrich and distilled under reduced pressure at 100 °C prior to use. [fac-lr(ppy)3], ethyl α-bromophenylacetate, benzyl alcohol, triethylamine, dimethylaminopyridine, bromoisobutyryl bromide, and (trimethylsilyl)diazomethane solution (2.0 M in diethyl ether) were purchased from Sigma-Aldrich and used as received.

Nuclear magnetic resonance spectra were recorded on a Varian 400 MHz, a Varian 500 MHz or a Varian 600 MHz instrument. All ¹H NMR experiments are reported in δ units, parts per million (ppm), and were measured relative to the signals for residual chloroform (7.26 ppm) in the deuterated solvent, unless otherwise stated. All ¹³C NMR spectra are reported in ppm relative to deuterochloroform (77.23 ppm), unless otherwise stated, and all were obtained with ¹H decoupling. Gel permeation chromatography (GPC) was performed on a Waters 2695 separation module with a Waters 2414 refractive index detector in chloroform with 0.25% triethylamine. Number average molecular weights (*Mₙ*) and weight average molecular weights (*M_{w}*) were calculated relative to linear polystyrene standards for calculation of *M_{w}*/*Mₙ.* The molecular weight (*Mₙ*) was calculated using ¹H NMR by comparing the integration of the benzyl peak in the initiator to the methyl peak in the polymer side chain unless otherwise noted.

LED strips (380 nm) were bought from elemental led (see www.elementalled.com) and used to line the inside of a beaker. Reactions were placed next to the 380 nm lights under vigorous stirring while cooling with compressed air. The light intensity was measured to be 0.65 µW/cm².

### Example 1

### Butyl Acrylate Polymerization

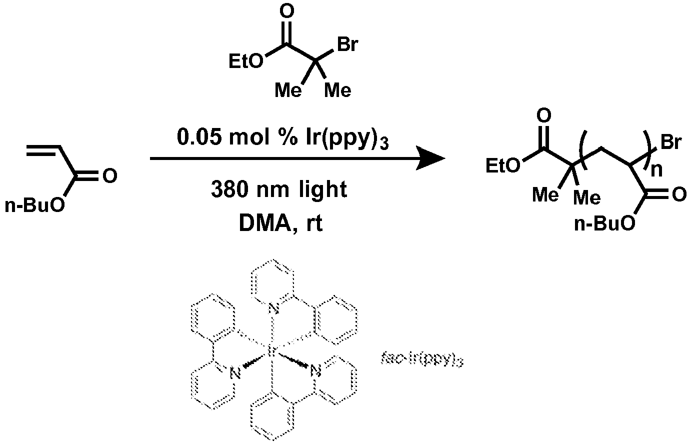

A vial equipped with a magnetic stir bar and fitted with a teflon screw cap septum was charged with butyl acrylate (535 µL, 3.75 mmol), *fac*-Ir(2-phenylpyridine)₃ (also as *fac-*Ir(ppy)₃, 1.2 mg, 0.05 mol %) and dimethylacetamide (0.5 mL). The reaction mixture was degassed with three freeze-pump-thaw cycles. The vial was then backfilled with argon and ethyl α-bromoisobutyrate (3.5 µL, 0.024 mmol) was injected via syringe. The reaction was stirred in front of 380 nm LEDs while cooling with compressed air to maintain ambient temperature. After 8.5 h the reaction was stopped by opening to air. (59% conversion, Mₙ = 9300 g/mol, Mₙ(theo) = 11,800 g/mol, PDI = 1.33).

### Comperative Example 1

Additional polymerizations were performed under conditions identical to those used for the controlled polymerization of methacrylates described in WO 2013/148722. The polymerizations were carried out in DMF as a solvent and the catalyst loading and concentration were varried. These results are sumarized in Table 1:

**Table 1. Polymerization of n-butyl acrylate with visible light**

| Entry | cat. loading (mol %) | time (h) | conversion (%) | Mₙ (expt) (g/mol) | Mₙ (theo) (g/mol) | PDI | concentration (M) |
|---|---|---|---|---|---|---|---|
| 1 | 0.005 | 3 | 66 | 11,300 | 13,200 | 2.02 | 2.4 |
| 2 | 0.005 | 1 | 54 | 14,200 | 10,800 | 1.72 | 3.6 |
| 3 | 0.05 | 1 | 39 | 9,100 | 7,800 | 1.53 | 3.6 |

Under conditions identical to those described in WO 2013/148722, acrylates polymerized but resulted in poor control over the molecular weight distribution (Table 1, entry 1). It was found that increasing the concentration of the polymerization from 2.4 M to 3.6 M decreased the polydispersity from 2.02 to 1.72. Moreover, by increasing catalyst loading to 0.05 mol %, the molecular weight distribution was improved to 1.53. These conditions gave good agreement between theoretical and experimental molecular weights and reasonable polydispersities.

Unexpectedly, only when dimethylacetamide was used as the solvent did the reactions led to reproducible results and polydispersities of ca. 1.30 or less. These results are shown in Examples 1-5.

### Example 2

### Methyl Acrylate Polymerization

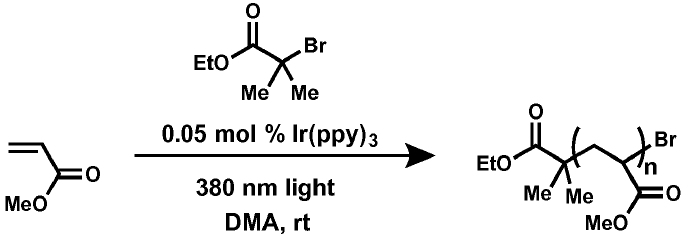

A vial equipped with a magnetic stir bar and fitted with a teflon screw cap septum was charged with methyl acrylate (324 µL, 3.75 mmol), *fac*-Ir(ppy)₃ (1.2 mg, 0.05 mol %) and dimethylacetamide (0.5 mL). The reaction mixture was degassed with three freeze-pump-thaw cycles. The vial was then backfilled with argon and ethyl α-bromoisobutyrate (2.4 µL, 0.018 mmol) was injected via syringe. The reaction was stirred in front of 380 nm LEDs while cooling with compressed air to maintain ambient temperature. After 10 h the reaction was stopped by opening to air. (51% conversion, Mₙ = 9700 g/mol, Mₙ(theo) = 10,200 g/mol, PDI = 1.28).

### Example 3

Additional light-mediated polymerization of methyl acrylate using Ir(ppy)₃ was performed, and the results are summarized in Table 2. General reaction conditions were: methyl acrylate (1 equiv.), Ir(ppy)₃ (variable, see table), benzyl α-bromoisobutyrate (0.004 equiv.), DMA (3.5 M of methyl acrylate) at room temperature with irradiation from 380 nm LEDs for 4 h. *M_{w}* / *Mₙ* was determined using size exculsion chromatography (SEC). *Mₙ* was determined by NMR, except where noted.

**Table 2. Polymerization of methyl acrylate with visible light**

| Entry | Ir(ppy)₃ loading (mol %) | conversion (%) | Mₙ (expt) (g/mol) | Mₙ (theo) (g/mol) | *M_{w}*/*Mₙ* |
|---|---|---|---|---|---|
| 1^{a} | 0.005 | 76 | 14,400 | 15,200 | 1.45 |
| 2 | 0.005 | 79 | 16,000 | 15,800 | 1.39 |
| 3 | 0.01 | 76 | 15,200 | 15,200 | 1.30 |
| 4 | 0.05 | 63 | 12,500 | 12,600 | 1.25 |
| 5 | 0.1 | 54 | 10,900 | 10,800 | 1.32 |
| 6^{b} | 0.05 | 0 | - | - | - |
| 7 | 0 | 43 | 240,000^{c} | 8,600 | 1.76 |

| | | | | | |
|---|---|---|---|---|---|
| ^{a} reaction run at 2 M, ^{b} reaction run in the dark; ^{c}*Mₙ* determined by GPC. | | | | | |

Increased control over acrylate polymerizations was achieved by varying the catalyst and monomer concentrations to account for the marked difference in kₚ and kₜ for acrylates vs. methacrylates. Indeed, increasing the monomer concentration from 3 M (Table 2, entry 1) to 3.5 M narrowed the molecular weight distribution to 1.39 (Table 2, entry 2). Further, increasing the catalyst loading to 0.05 mol % provided additional improvement in polydispersity (Table 2, entries 3-5). It should be noted that even at Ir(ppy)₃ concentrations as high as 0.1 mol %, controlled polymerization was observed, whereas for methacrylates such high catalyst loadings resulted in uncontrolled polymerization. We hypothesize that this difference is due to increased difficulty in acrylate chain end reduction. Control experiments without catalyst, or in the absence of irradiation, led to either uncontrolled or no polymerization, respectively (Table 2, entries 6 and 7). Without being bound to a particular theory, it is believed that auto-polymerization does not play a role under the optimized conditions due to the high molar absorptivity of Ir(ppy)₃ causing nearly all of the light to be absorbed by the catalyst.

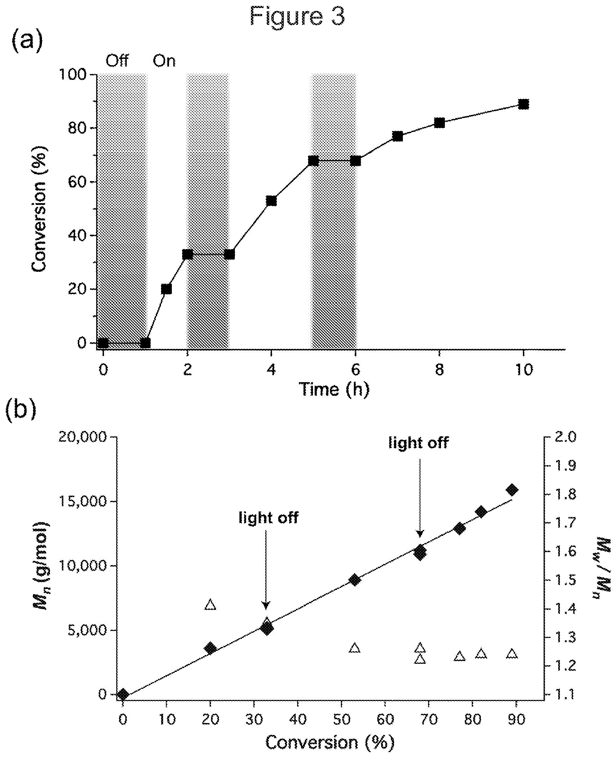

To demonstrate the capability to turn the polymerization "on" and "off" while maintaining control, methyl acrylate, benzyl α-bromoisobutyrate initiator, and Ir(ppy)₃ were initially combined and kept in the dark for 1 hour, with no polymerization observed. The reaction was then exposed to light, reaching 33% conversion after 1 hour and again removal of the light source results in no polymerization. This cycle could be repeated multiple times indicating excellent temporal control (Figure 3a). Further, a linear relationship between molecular weight and conversion was observed up to -90% conversion, indicating that even at high conversions the polymerization is controlled (Figure 3b). Finally, a linear relationship for In([M]₀/[M]ₜ) versus exposure time indicates that a constant radical concentration exists throughout the polymerization (results not shown) illustrating the stimuli-responsive and living nature of these Ir(ppy)₃ based acrylate polymerizations.

### Example 4

Additional light-mediated polymerization of various alkyl acrylates using Ir(ppy)₃ was performed; the results are summarized in Table 3. General reaction conditions were: acrylate monomer (1 equiv.), Ir(ppy)₃ (0.05 mol %), benzyl α-bromoisobutyrate (0.00043 - 0.026 equiv.), DMA (3.5 M of methyl acrylate) at room temperature with irradiation from 380 nm LEDs. *M_{w}*/*Mₙ* was determined using SEC. *Mₙ* was determined by NMR and MALLS.

**Table 3. Molecular weight control of alkyl substituted acrylates**

| Entry | Monomer | Mₙ (expt) (g/mol) | Mₙ (theo) (g/mol) | *M_{w}* / *Mₙ* |
|---|---|---|---|---|
| 1 | methyl acrylate | 900 | 800 | 1.42 |
| 2 | | 3,000 | 2,800 | 1.32 |
| 3 | | 7,900 | 8,200 | 1.19 |
| 4 | | 18,400 | 18,000 | 1.22 |
| 5 | | 28,900 | 29,000 | 1.37 |
| 6 | *n*-butyl actrylate | 2,400 | 2,500 | 1.34 |
| 7 | | 5,100 | 4,800 | 1.25 |
| 8 | | 11,300 | 10,600 | 1.24 |
| 9 | | 24,800 | 27,600 | 1.31 |
| 10 | | 42,600 | 38,400 | 1.45 |
| 11 | *t*-butyl acrylate | 3,900 | 3,600 | 1.37 |
| 12 | | 7,000 | 7,200 | 1.26 |
| 13 | | 14,300 | 14,600 | 1.27 |
| 14 | | 32,300 | 28,800 | 1.29 |
| 15 | | 40,600 | 40,200 | 1.36 |
| 16 | | 62,700 | 60,000 | 1.42 |
| 17 | | 108,700 | 108,000 | 1.46 |
| 18 | | 200,300 | 193,200 | 1.44 |

In all cases, excellent agreement is observed between experimental and theoretical molecular weights for molecular weights of less than 1,000 g/mol to in excess of 100,000 g/mol for t-butyl acrylate (Table 3, entry 17 and 18). These results are in full agreement with a controlled process where molecular weight is determined by initiator to monomer ratio and, importantly, the optimized conditions lead to low polydispersities for a variety of acrylate monomers.

### Example 5

### Acid Functionalized Initiator Polymerizations

This example demonstrates the synthesis of chain end functionalized poly(n-butyl acrylate) from 3-bromopriopionic acid as an initiator. Over a wide range of initiator/monomer ratios (see Table 4), accurate control over molecular weight and narrow polydispersities was obtained.

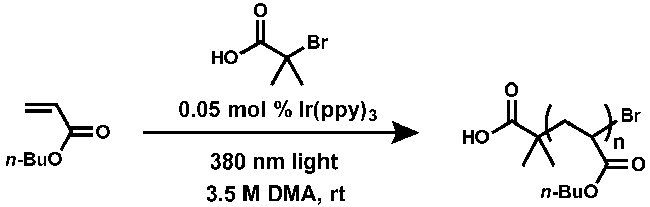

A vial equipped with a magnetic stir bar and fitted with a teflon screw cap septum was charged with *n*-butyl acrylate (535 µL, 3.75 mmol), *fac*-Ir(ppy)₃ (1.2 mg, 0.05 mol %) and dimethylacetamide (436 µL). The reaction mixture was degassed with three freeze-pump-thaw cycles. The vial was then backfilled with argon. In a separate vial, 3-bromopropionic acid (0.024-0.048 mmol) was combined with dimethylacetamide (100 µL) and degassed with three freeze-pump-thaw cycles before being transferred to the vial containing monomer and catalyst via syringe. The reaction was vigorously stirred in front of 380 nm LEDs while cooling with compressed air to maintain ambient temperature. The reaction conversion was monitored by ¹H NMR. The product was slowly dropped into a flask of vigorously stirring hexanes. A yellow oil precipitated out, and the solvent was decanted off. The product was then dried.

**Table 4. Random copolymerizations of acrylic acid (AA) and ethyl acrylate (EA)**

| Entry | Time (h) | conversion (%) | Mₙ (expt) (g/mol) | *M_{w}* / *Mₙ* |
|---|---|---|---|---|
| 1 | 3 | 38 | 14,700 | 1.22 |
| 2 | 3 | 56 | 30,400 | 1.28 |

### Example 6

Copolymerization of acrylic acid (AA) and ethyl acrylate (EA) was evaluated at feed ratios of up to 50 mol% acrylic acid. The results are illustated in Table 5. General reaction conditions were: ethyl acrylate (1 equiv.), acrylic acid (0-1 equiv.), Ir(ppy)₃ (0.05 mol %), benzyl α-bromoisobutyrate (0.004 equiv.), DMA (3.5 M of methyl acrylate) at room temperature with irradiation from 380 nm LEDs. *M_{w}* / *Mₙ* was determined using SEC. *Mₙ* was determined by NMR. An exemplary procedure is as follows:
Table 4, entry 3: A vial equipped with a magnetic stir bar and fitted with a teflon screw cap septum was charged with ethyl acrylate (369 µL, 3.38 mmol), acrylic acid (27 µL, 0.38 mmol), *fac*-Ir(ppy)₃ (1.2 mg, 0.05 mol %) and dimethylacetamide (675 µL, 3.5 M). The reaction mixture was degassed with three freeze-pump-thaw cycles. The vial was then backfilled with argon and benzyl α-bromoisobutyrate (3.4 µL, 0.018 mmol) was injected via syringe. The reaction was vigorously stirred in front of 380 nm LEDs while cooling with compressed air to maintain ambient temperature. In 1.5 h, the reaction reached 57 % conversion as monitored by ¹H NMR. The molecular weight was calculated using ¹H NMR (*Mₙ* = 9,500 g/mol). The product was slowly dropped into a flask of vigorously stirring methanol. A yellow oil precipitated out, and the solvent was decanted off. The product was then dried.

**Table 5. Random copolymerizations of acrylic acid (AA) and ethyl acrylate (EA)**

| Entry | AA : EA | % AA incorpotation | Mₙ (expt) (g/mol) | Mₙ (theo) (g/mol) | *M_{w}* / *Mₙ* |
|---|---|---|---|---|---|
| 1 | 0:100 | 0 | 7,700 | 7,600 | 1.28 |
| 2 | 5:95 | 2 | 12,300 | 12,400 | 1.28 |
| 3 | 10:90 | 8 | 9,500 | 10,600 | 1.38 |
| 4 | 10:90 | 8 | 17,300 | 21,600 | 1.44 |
| 5 | 10:90 | 7 | 38,300 | 37,200 | 1.45 |
| 6 | 20:80 | 15 | 13,800 | 12,200 | 1.38 |
| 7 | 30:70 | 21 | 13,500 | 11,100 | 1.51 |
| 8 | 40:60 | 36 | 16,300 | 12,100 | 1.65 |
| 9 | 50:50 | 46 | 20,500 | 11,500 | 1.90 |

For feed ratios of 5-20 mol%, excellent agreement between experimental and theoretical molecular weights is observed with polydispersities between 1.25 and 1.40. The controlled nature was further demonstrated by examining the synthesis of higher molecular weight materials at a fixed 10 mol% feed ratio of acrylic acid. In these cases, a similar level of molecular weight control is observed with the polydispersity increasing slightly to ca. 1.35-1.45. Only at higher incorporations of AA (30-50 mol %) was a loss of control observed. This ability to incorporate acrylic acid directly into acrylate backbones at moderate loading levels while retaining control over the polymerization process is significant and offers a wide range of opportunities in the design of functional macromolecules.

### Example 7

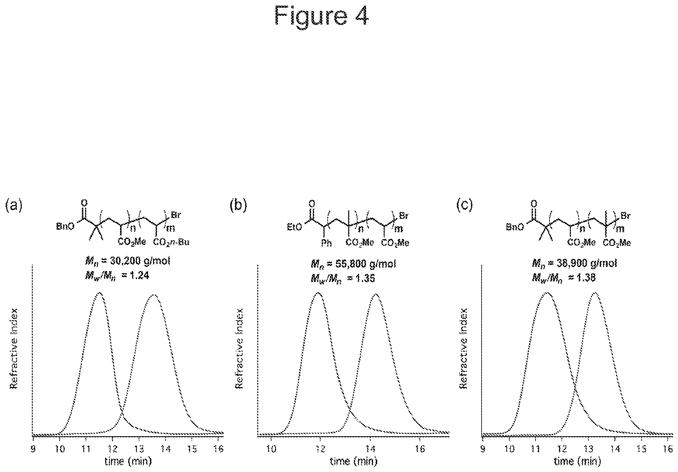

Acrylates were used to prepare block copolymers. Initially, simple re-initiation was studied by the chain extension of a methyl acrylate homopolymer (*Mₙ* = 7,800 g/mol; *M_{w}*/*Mₙ* = 1.21) with *n*-butyl acrylate to yield a block copolymer (*Mₙ* = 30,200 g/mol; *M_{w}*/*Mₙ* = 1.24). Size exclusion chromatography (SEC) shows minimal residual homopolymer after chain-extension, indicating excellent fidelity and reactivation of the alkyl bromide chain-end (Figure 4a).

For methacrylate-acrylate diblock copolymer systems, the sequence of monomer polymerization can have a dramatic influence on the fidelity of the process. In traditional ATRP, the use of comonomers or halogen exchange is necessary when chain extending polyacrylate macroinitiators with methacrylates.

In the approach described herein, a poly(methyl acrylate) homopolymer was synthesized as described in Example 2 and chain extended with methyl methacrylate to yield the inverse block copolymer with accurate control over molecular weight and polydispersity (Figure 4b). For the reverse case, PMMA homopolymer was synthesized under the conditions reported by Fors, B. P. and Hawker, C. J. (Angew. Chem. Int. Ed. (2012), 51, 8850-8853) and the this macroinitiator was used to polymerize methyl acrylate and 0.01 mol % Ir(ppy)₃ to yield a PMMA-*b*-MA block copolymer with a polydispersity of 1.35 and little to no tailing in the homopolymer regime of the SEC trace (Figure 4c).

This high level of control in both cases further illustrates the robust nature and simplicity of the methods of the disclosure and the ability to prepare different block copolymer sequences is an advantage over traditional ATRP systems.

### Example 8

### Dimethyl Acrylamide Polymerization

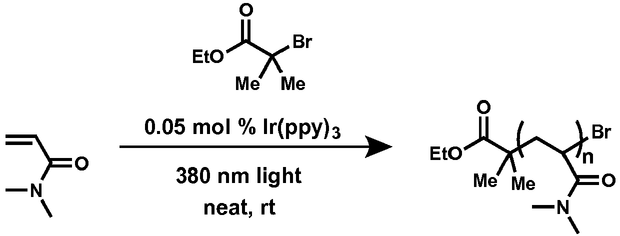

A vial equipped with a magnetic stir bar and fitted with a teflon screw cap septum was charged with dimethyl acrylamide (386 µL, 3.75 mmol) and *fac*-Ir(ppy)₃ (1.2 mg, 0.05 mol %). The reaction mixture was degassed with three freeze-pump-thaw cycles. The vial was then backfilled with argon and ethyl α-bromoisobutyrate (2.7 µL, 0.019 mmol) was injected via syringe. The reaction was stirred in front of 380 nm LEDs while cooling with compressed air to maintain ambient temperature. After 7.5 h the reaction was stopped by opening to air. (22% conversion, Mₙ = 8800 g/mol, Mₙ(theo) = 4400 g/mol, PDI = 1.52).

### Example 9

### Poly(methyl acrylate)-b-(n-butyl acrylate)

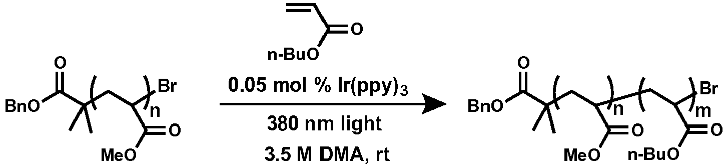

A vial equipped with a magnetic stir bar and fitted with a teflon screw cap septum was charged with n-butyl acrylate (392 µL, 2.74 mmol), *fac*-Ir(ppy)₃ (0.9 mg, 0.05 mol %) and dimethylacetamide (191 µL). In another flask, 200 µL of dimethyl acetamide was added to the poly(methyl acrylate) macroinitiator (51 mg, 0.0088 mmol). Both reaction mixtures were degassed with three freeze-pump-thaw cycles. Special care was taken to handle the macroinitiator in the dark as residual Ir(ppy)₃ may degrade chain ends in the presence of light. Using a syringe, the macroinitiator was then transferred to the flask containing n-butyl acrylate. The reaction was stirred in front of 380 nm LEDs while cooling with compressed air to maintain ambient temperature. After 5.5 h the reaction was stopped by opening to air and dropped into MeOH (20 mL). A yellow oil crashed out and was removed from the liquid. The remaining liquid was placed into a freezer (ca. -20 °C) for 1 h. The methanol was then decanted off and the residual solvent was evaporated off. This process was repeated 3 times to yield 45 mg of a yellow oil. *Mₙ* = 30,200 g/mol, *M_{w}*/*Mₙ* = 1.24; ¹H NMR (600 MHz, CDCl3) δ: 5.07 (m, 0.1H), 4.04 (bm, 2H), 3.66 (s, 0.87H), 2.27 (bm, 1.47H), 1.91 (bm, 0.81H), 1.60 (bs, 3.04H), 1.48 (bm, 0.43H), 1.37 (bs, 1.93H), 1.25 (s, 0.14H), 0.93 (t, 2.67H) ppm.

### Example 10

### Methyl methacrylate Polymerization

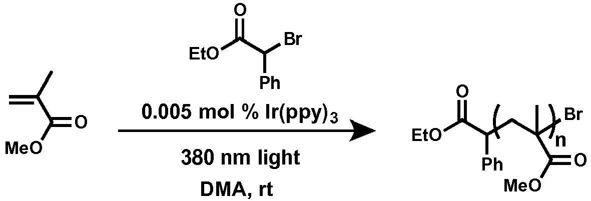

A vial equipped with a magnetic stir bar and fitted with a rubber septum was charged with methyl methacrylate (2.4 mL, 22.5 mmol), *fac*-Ir(ppy)₃ (0.7 mg, 0.005 mol %) and dimethylacetamide (8.4 mL). The reaction mixture was degassed with three freeze-pump-thaw cycles. The vial was then backfilled with argon and benzyl α-bromoisobutyrate (16.9 µL, 0.09 mmol) was injected via syringe. The reaction was stirred in front of 380 nm LEDs while cooling with compressed air to maintain ambient temperature. The reaction was stirred in front of the light for 3 h and then put into the dark by wrapping it in aluminum foil. A syringe wrapped in aluminum foil was used to transfer the reaction mixture while in the dark into a stirred solution of hexanes (50 mL, also wrapped in aluminum foil). A white precipitate resulted, was filtered, and re-dissolved in dichloromethane before precipitating again into hexanes to yield 610 mg of a white powder. *Mₙ* = 7,200 g/mol, *M_{w}*/*Mₙ* = 1.36.

### Example 11

### Poly(methyl methacrylate)-b-(methyl acrylate)

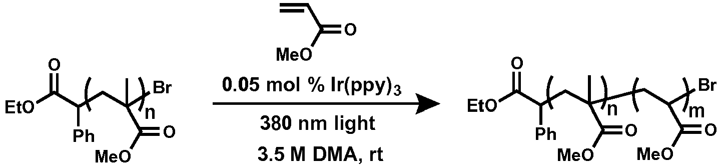

A vial equipped with a magnetic stir bar and fitted with a teflon screw cap septum was charged with methyl acrylate (422 µL, 2.74 mmol), *fac*-Ir(ppy)₃ (1.5 mg, 0.05 mol %) and dimethyl acetamide (515 µL). In another flask, 400 µL of dimethyl acetamide was added to the poly(methyl methacrylate) macroinitiator (72.4 mg, 0.0101 mmol). Both reaction mixtures were degassed with three freeze-pump-thaw cycles. Using a syringe, the monomer and catalyst were then transferred to the flask containing macroinitiator. The reaction was stirred in front of 380 nm LEDs while cooling with compressed air to maintain ambient temperature. After 5.5 h the reaction was stopped by opening to air and precipitated into MeOH (20 mL). A yellow oil crashed out, and the solution was placed into a freezer (ca. -20 °C) for 1 h. The methanol was then decanted off and the residual solvent was evaporated off. This process was repeated 2 times to yield 45 mg of a yellow oil. *Mₙ* = 63,400 g/mol, *M_{w}*/*Mₙ* = 1.46.

### Example 12

### Poly(methyl acrylate)-b-(methyl methacrylate)

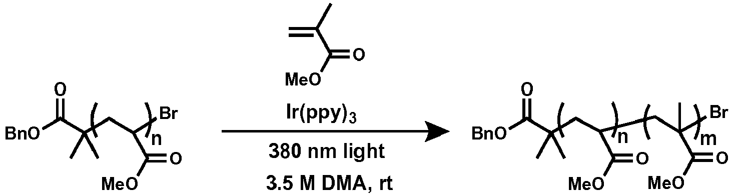

A vial equipped with a magnetic stir bar and fitted with a teflon screw cap septum was charged with methyl methacrylate (458 µL, 4.29 mmol), and dimethyl acetamide (400 µL). In another flask, 368 µL of dimethyl acetamide was added to the poly(methyl acrylate) macroinitiator (90 mg, 0.0107 mmol). Residual Ir(ppy)₃ from the poly(methyl acrylate) macroinitiator was sufficient to catalyze block copolymerization. Both reaction mixtures were degassed with three freeze-pump-thaw cycles. Special care was taken to handle the macroinitiator in the dark as residual Ir(ppy)₃ may degrade chain ends in the presence of light. Using a syringe, the macroinitiator was then transferred to the flask containing methyl methacrylate. The reaction was stirred in front of 380 nm LEDs while cooling with compressed air to maintain ambient temperature. After 7 h the reaction was stopped by opening to air and precipitated into MeOH (20 mL). A yellow oil crashed out, and the solution was placed into a freezer (ca. -20 °C) for 1 h. The methanol was then decanted off and the residual solvent was evaporated off. This process was repeated 2 times to yield 100 mg of a yellow oil. *Mₙ* = 38,900 g/mol, *M_{w}*/*Mₙ* = 1.38.

## Claims

1. A method for preparing an acrylic polymer composition, comprising:
combining one or more (meth)acrylate, (meth)acrylamide, or (meth)acrylonitrile monomers or mixtures thereof with an initiator and a photoredox catalyst in a solvent system comprising N,N-dimethylacetamide to obtain a reaction mixture;
polymerizing the monomers by irradiating the reaction mixture with a light source; and
discontinuing polymerization.

2. A method for preparing an acrylic polymer composition of formula: 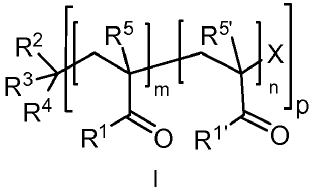 wherein
m and n are independently an integer about 3 to about 1500;
p is an integer of 1 to 6;
X is a halogen, xanthate, dithioester, trithiocarbonate, dithiocarbamate, or nitroxide;
each R¹ and R¹' is independently -OH, C₁-C₂₀ alkoxy, amino, mono or di(C₁-C₂₀ alkyl)amino, aryloxy, or alkoxyaryl;
R² is -CN, -CH=CH₂, -C(O)C₁-C₆ alkoxy, -COOH, -(CH₂)₁₋₂C(O)C₁-C₆ alkoxy, -(CH₂)₁₋₂COOH, -(CH₂)₁₋₃C₁-C₆ alkoxy, -(CH₂)₁₋₃OH, C₁-C₆ alkyl, aryl, or heteroaryl;
R³ and R⁴ are independently selected from hydrogen, -CN, C₁-C₆ alkyl, and phenyl; and each R⁵ and R⁵' is independently is H or methyl;
the method comprising:
combining one or more monomers with an initiator and a photoredox catalyst in a solvent system comprising N,N-dimethylacetamide to obtain a reaction mixture;
polymerizing the monomers by irradiating the reaction mixture with a light source; and
discontinuing polymerization.

3. A method according to claim 1 or 2, wherein the concentration of the monomer in the reaction mixture is at least about 2.0 M.

4. A method according to claim 3, wherein the concentration of the monomer in the reaction mixture is at least about 3.0 M.

5. A method according to any one of claims 1-4, wherein the photoredox catalyst is present at about 0.005 mol% to about 10 mol% relative to the amount of monomer.

6. A method according to claim 5, wherein the photoredox catalyst is present at about 0.01 mol% to about 0.1 mol% relative to the amount of monomer.

7. A method according to any one of claims 1-6, wherein the photoredox catalyst is a transition metal complex.

8. A method according to claim 7, wherein the transition metal complex is *fac*-Ir(2-pyridylphenyl)₃.

9. A method according to any one of claims 1-8, wherein the initiator is ethyl α-bromoisobutyrate or benzyl α-bromoisobutyrate.

10. A method according to any one of claims 1-9, wherein the monomer is an acrylate.

11. A method according to claim 10, wherein the acrylate is selected from acrylic acid, methyl acrylate, ethyl acrylate, and butyl acrylate.

12. A method according to any one of claims 1-11, wherein the acrylic polymer comprises a single monomer.

13. A method according to any one of claims 1-11, wherein the acrylic polymer is a block, random, or gradient copolymer comprised of at least two different monomers.

14. A method according to any one of claims 1-13, wherein the molecular weight of the acrylic polymer is dependent on irradiation time and/or intensity of the light source.

15. A method according to any one of claims 1-14, wherein the acrylate polymer exhibits a polydispersity of M_{w}/Mₙ between about 1.0 and about 2.0.

## Patentansprüche

1. Ein Verfahren zum Herstellen einer Acrylpolymerzusammensetzung, das Folgendes beinhaltet:
Zusammenführen von einem oder mehreren (Meth-)Acrylat-, (Meth-)Acrylamid- oder (Meth-)Acrylnitril-Monomeren oder Mischungen davon mit einem Initiator und einem Photoredoxkatalysator in einem Lösungsmittelsystem, das N,N-Dimethylacetamid beinhaltet, zum Erhalten einer Reaktionsmischung;
Polymerisieren der Monomere durch Bestrahlen der Reaktionsmischung mit einer Lichtquelle; und
Einstellen der Polymerisation.

2. Ein Verfahren zum Herstellen einer Acrylpolymerzusammensetzung mit der folgenden Formel: 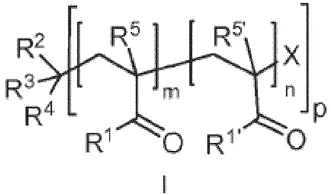 wobei
m und n unabhängig voneinander eine Ganzzahl von etwa 3 bis etwa 1500 sind; p eine Ganzzahl von 1 bis 6 ist;
X ein Halogen, Xanthat, Dithioester, Trithiocarbonat, Dithiocarbamat oder Nitroxid ist; R¹ und R¹' jeweils unabhängig voneinander -OH, C₁-C₂₀-Alkoxy, Amino, Mono- oder Di(C₁-C₂₀-alkyl)amino, Aryloxy oder Alkoxyaryl sind;
R² -CN, -CH=CH₂, -C(O)C₁-C₆-Alkoxy, -COOH, -(CH₂)₁₋₂C(O)C₁-C₆-Alkoxy, -(CH₂)₁₋₂COOH, -(CH₂)₁₋₃C₁-C₆-Alkoxy, -(CH₂)₁₋₃OH, C₁-C₆-Alkyl, Aryl oder Heteroaryl ist;
R³ und R⁴ unabhängig voneinander aus Wasserstoff, -CN, C₁-C₆-Alkyl und Phenyl ausgewählt sind; und
R⁵ und R⁵' jeweils unabhängig voneinander H oder Methyl sind;
wobei das Verfahren Folgendes beinhaltet:
Zusammenführen eines oder mehrerer Monomere mit einem Initiator und einem Photoredoxkatalysator in einem Lösungsmittelsystem, das N,N-Dimethylacetamid beinhaltet, zum Erhalten einer Reaktionsmischung;
Polymerisieren des Monomers durch Bestrahlen der Reaktionsmischung mit einer Lichtquelle; und
Einstellen der Polymerisation.

3. Verfahren gemäß Anspruch 1 oder 2, wobei die Konzentration des Monomers in der Reaktionsmischung mindestens etwa 2,0 M beträgt.

4. Verfahren gemäß Anspruch 3, wobei die Konzentration des Monomers in der Reaktionsmischung mindestens etwa 3,0 M beträgt.

5. Verfahren gemäß einem der Ansprüche 1-4, wobei der Photoredoxkatalysator bei etwa 0,005 Mol-% bis etwa 10 Mol-%, bezogen auf die Menge an Monomer, vorliegt.

6. Verfahren gemäß Anspruch 5, wobei der Photoredoxkatalysator bei etwa 0,01 Mol-% bis etwa 0,1 Mol-%, bezogen auf die Menge an Monomer, vorliegt.

7. Verfahren gemäß einem der Ansprüche 1-6, wobei der Photoredoxkatalysator ein Übergangsmetallkomplex ist.

8. Verfahren gemäß Anspruch 7, wobei der Übergangsmetallkomplex *fac*-Ir(2-pyridylphenyl)₃ ist.

9. Verfahren gemäß einem der Ansprüche 1-8, wobei der Initiator Ethyl-α-bromisobutyrat oder Benzyl-α-bromisobutyrat ist.

10. Verfahren gemäß einem der Ansprüche 1-9, wobei das Monomer ein Acrylat ist.

11. Verfahren gemäß Anspruch 10, wobei das Acrylat aus Acrylsäure, Methylacrylat, Ethylacrylat und Butylacrylat ausgewählt ist.

12. Verfahren gemäß einem der Ansprüche 1-11, wobei das Acrylpolymer ein einziges Monomer beinhaltet.

13. Verfahren gemäß einem der Ansprüche 1-11, wobei das Acrylpolymer ein Blockcopolymer, statistisches Copolymer oder Gradientcopolymer ist, das aus mindestens zwei unterschiedlichen Monomeren besteht.

14. Verfahren gemäß einem der Ansprüche 1-13, wobei das Molekulargewicht des Acrylpolymers von der Bestrahlungszeit und/oder der Intensität der Lichtquelle abhängt.

15. Verfahren gemäß einem der Ansprüche 1-14, wobei das Acrylatpolymer eine Polydispersität von M_{w}/Mₙ zwischen etwa 1,0 und etwa 2,0 aufweist.

## Revendications

1. Une méthode pour préparer une composition de polymère acrylique, comprenant :
la combinaison d'un ou de plusieurs monomères (méth)acrylate, (méth)acrylamide, ou (méth)acrylonitrile ou mélanges de ceux-ci avec un initiateur et un catalyseur photoredox dans un système de solvants comprenant du N,N-diméthylacétamide pour obtenir un mélange réactionnel ;
la polymérisation des monomères en irradiant le mélange réactionnel à l'aide d'une source de lumière ; et
l'interruption de la polymérisation.

2. Une méthode pour préparer une composition de polymère acrylique de formule : 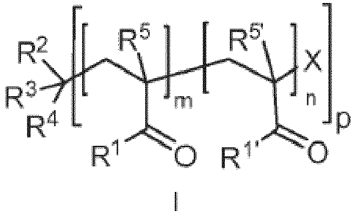 dans laquelle
m et n sont indépendamment un nombre entier d'environ 3 à environ 1 500 ;
p est un nombre entier de 1 à 6 ;
X est un halogène, xanthate, dithioester, trithiocarbonate, dithiocarbamate, ou nitroxyde ;
R¹ et R¹' sont chacun indépendamment -OH, un alcoxy en C₁ à C₂₀, un amino, un mono ou di(C₁-C₂₀ alkyl)amino, un aryloxy, ou un alcoxyaryle ;
R² est -CN, -CH=CH₂, -C(O)C₁-C₆ alcoxy, -COOH, -(CH₂)₁₋₂C(O)C₁₋C₆ alcoxy -(CH₂)₁₋₂COOH, -(CH₂)₁₋₃C₁-C₆ alcoxy, -(CH₂)₁₋₃OH, un alkyle en C₁ à C₆, un aryle, ou un hétéroaryle ;
R³ et R⁴ sont indépendamment choisis parmi un hydrogène, -CN, un alkyle en C₁ à C₆, et un phényle ; et
R⁵ et R⁵' sont chacun indépendamment un H ou un méthyle ;
la méthode comprenant :
la combinaison d'un ou de plusieurs monomères avec un initiateur et un catalyseur photoredox dans un système de solvants comprenant du N,N-diméthylacétamide pour obtenir un mélange réactionnel ;
la polymérisation des monomères en irradiant le mélange réactionnel à l'aide d'une source de lumière ; et
l'interruption de la polymérisation.

3. Une méthode selon les revendications 1 ou 2, dans laquelle la concentration du monomère dans le mélange réactionnel est d'au moins 2,0 M environ.

4. Une méthode selon la revendication 3, dans laquelle la concentration du monomère dans le mélange réactionnel est d'au moins 3,0 M environ.

5. Une méthode selon n'importe laquelle des revendications 1 à 4, dans laquelle le catalyseur photoredox est présent à hauteur d'environ 0,005 % en mole à environ 10 % en mole par rapport à la quantité de monomère.

6. Une méthode selon la revendication 5, dans laquelle le catalyseur photoredox est présent à hauteur d'environ 0,01 % en mole à environ 0,1 % en mole par rapport à la quantité de monomère.

7. Une méthode selon n'importe laquelle des revendications 1 à 6, dans laquelle le catalyseur photoredox est un complexe de métal de transition.

8. Une méthode selon la revendication 7, dans laquelle le complexe de métal de transition est *fac*-Ir(2-pyridylphényl)₃.

9. Une méthode selon n'importe laquelle des revendications 1 à 8, dans laquelle l'initiateur est l'a-bromoisobutyrate d'éthyle ou l'a-bromoisobutyrate de benzyle.

10. Une méthode selon n'importe laquelle des revendications 1 à 9, dans laquelle le monomère est un acrylate.

11. Une méthode selon la revendication 10, dans laquelle l'acrylate est choisi parmi un acide acrylique, un acrylate de méthyle, un acrylate d'éthyle, et un acrylate de butyle.

12. Une méthode selon n'importe laquelle des revendications 1 à 11, dans laquelle le polymère acrylique se compose d'un seul monomère.

13. Une méthode selon n'importe laquelle des revendications 1 à 11, dans laquelle le polymère acrylique est un copolymère séquencé, statistique ou à gradient composé d'au moins deux monomères différents.

14. Une méthode selon n'importe laquelle des revendications 1 à 13, dans laquelle le poids moléculaire du polymère acrylique dépend de la durée et/ou de l'intensité d'irradiation de la source de lumière.

15. Une méthode selon n'importe laquelle des revendications 1 à 14, dans laquelle le polymère d'acrylate présente une polydispersité de M_{w}/Mₙ comprise entre environ 1,0 et environ 2,0.
